Europäisches Patentamt

(19) European Patent Office

Office européen des brevets

(11) Veröffentlichungsnummer: **0 268 233 B1**

(12) **EUROPÄISCHE PATENTSCHRIFT**

(45) Veröffentlichungstag der Patentschrift: 06.03.91

(51) Int. Cl.⁵: **C09K 3/10**

(21) Anmeldenummer: 87116803.5

(22) Anmeldetag: 13.11.87

Die Akte enthält technische Angaben, die nach dem Eingang der Anmeldung eingereicht wurden und die nicht in dieser Patentschrift enthalten sind.

(54) **Flachdichtungsmaterial aus Fluorkunststoff.**

(30) Priorität: 13.11.86 DE 3638703

(43) Veröffentlichungstag der Anmeldung:
25.05.88 Patentblatt 88/21

(45) Bekanntmachung des Hinweises auf die
Patenterteilung:
06.03.91 Patentblatt 91/10

(84) Benannte Vertragsstaaten:
AT BE CH DE FR IT LI NL SE

(56) Entgegenhaltungen:
DE-C- 2 611 523
GB-A- 1 155 270

(73) Patentinhaber: Martin Merkel GmbH & Co. KG
Sanitasstrasse 17-21
W-2102 Hamburg 93(DE)

(72) Erfinder: Bock, Klaus Dieter, Dipl.-Ing.
Triftstrasse 67b
W-2100 Hamburg 90(DE)
Erfinder: FaBbender, Hagen
Reinsdorfweg 2a
W-2102 Hamburg 93(DE)
Erfinder: Jonas, Reinhold, Dr.-Ing.
Grotelerweg 63
W-2100 Hamburg 90(DE)

(74) Vertreter: Glawe, Delfs, Moll & Partner Patentanwälte
Postfach 26 01 62 Liebherrstrasse 20
W-8000 München 26(DE)

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Flachdichtung aus einem nachgiebigen Fluorkunststoff mit einem Gehalt von 0,5 bis 50 Gew.-% an porenbildendem, teilchenförmigem, anorganischem Füllstoff.

Die Dichtwirkung einer Flachdichtung beruht auf ihrer Fähigkeit, sich den Flächen, zwischen die sie eingespannt ist, unter dem Einspanndruck weitgehend formgleich anzupassen. Diese Anpassung soll auch dann aufgrund einer elastischen Rückstellfähigkeit des Flachdichtungsmaterials erhalten bleiben, wenn die Distanz zwischen den Einspannflächen aufgrund mechanischer oder thermischer Einwirkungen wechselt. Die Anpassung soll unter möglichst geringen Spannkräften zustande kommen können. Schließlich soll das Material gegenüber dem abzudichtenden Medium weitgehend inert und undurchlässig sein.

Reines Polytetrafluorethylen genügt zwar den chemischen Anforderungen, hat aber für viele Anwendungszwecke ein unzureichendes Rückstellvermögen und eine zu geringe Form-beständigkeit. Durch Modifikation des Materials mittels eine Anteils an schmelzbaren Fluorkunststoffen lassen sich die Formbeständigkeit und das Rückstellvermögen verbessern.

Bekannt ist ferner ein unter dem Warenzeichen "Gylon Standard" vertriebenes Flachdichtungsmaterial, das aus mit Silicium-dioxyd gefülltem Polytetrafluorethylen besteht. Es weist eine verhältnismäßig hohe Festigkeit auf und verlangt daher hohe Einspannkräfte, die es für empfindliche Apparaturen un-geeignet machen. Sein Rückstellvermögen ist zwar besser als das von PTFE, aber für viele Anwendungszwecke ist ein höheres Rückstellvermögen erwünscht. Ferner ist unter dem Warenzeichen "Gylon Blue" ein Flachdichtungsmaterial auf dem Markt, welches in einem modifizierten PTFE einen von winzigen Glashohlkugeln gebildeten Füllstoff enthält. Dies Material ist weicher als das vorerwähnte, was moglicherweise damit zusammenhängt, daß die Hohlkugeln unter der Dichtkraft teilweise zerstört werden und dadurch Porenvolumen freigeben. Die elastischen Kräfte des Kunststoffmaterials sowie das in den Poren durch die Dicht kraft komprimierte Gas erzeugen elastische Rückstell-kräfte, wobei diese aber, soweit sie auf das komprimierte Gas zurückgehen, nachlassen, falls das Gas im Laufe der Zeit herausdiffundiert. Seine Belastungsgrenze ist nach Her-stellerangaben niedrig. - Schließlich ist unter dem Waren-zeichen "Gylon Black" auch ein Flachdichtungsmaterial auf Fluorkunststoffbasis bekannt, das Graphit als Füllstoff enthält. Sein Rückstellvermögen ist kaum größer als das von "Gylon Standard". Es entspricht einem anderen bekannten Flachdichtungsmaterial (GB-A 1155270), das aus PTFE mit Graphit als Füllstoff durch Freisintern hergestellt ist und sich durch erhöhte Formbeständigkeit gegenüber reinem PTFE unter Belastung auszeichnet. Über sein Rückstellvermögen ist nichts bekannt; es dürfte dem von "Gylon Black" gleichen.

Neben Flachdichtungen auf der Basis von Fluorkunststoff gibt es solche auf der Basis von gebläntem Graphit (DE-PS 1 253 130, DE-OS 24 41 602, DE-OS 32 44 595). Graphitpartikeln lassen sich durch Schockverdampfung von zwischen die Graphitschichten eingelagerten Fremdstoffen auf ein Vielfaches ihres ursprünglichen Volumens aufblähen. Daraus hergestellte Preßkörper haben eine quer zur Preßrichtung verlaufende Schichtstruktur mit guter Elastizität und sind auch für Flachdichtungen geeignet. Bestehen sie ausschließlich aus gepreßtem Graphit, sind sie jedoch schlecht handhabbar wegen ihrer geringen mechanischen Festigkeit und Bruchanfälligkeit. Diesen Mangel kann man verringern, wenn auch nicht ganz ausschließen, durch Zusatz von organischen Bindemitteln, die in geringen Mengen von wenigen Gewichtsprozenten zugesetzt werden damit sie die elastischen Eigenschaften des Graphitgefüges nicht verändern.

Bekannt sind auch nach diesem Prinzip aufgebaute Dichtungsringe (DE-PS 26 11 523), die aus expandiertem und gepreßtem Graphitpulver bestehen, in welchem die Graphitpartikeln unter Belassung von Hohlräumen durch Brücken aus Tetrafluorethylen-Perfluorpropylen-Copolymerisat miteinander verbunden sind. Neben einer Verminderung der Bruchanfälligkeit verleihen die Hohlräume dem Produkt eine die selbstschmierende Eigenschaft des Graphits ergänzende Ölspeicher fähigkeit und prädestinieren es damit für dynamische Dichtungen. Für statische Dichtungen, insbesondere Flachdichtungen, ist das Material jedoch wegen seiner durch die Hohlräume verursachten Durchlässigkeit nicht geeignet.

Der Erfindung liegt die Aufgabe zugrunde, das eingangs genannte Flachdichtungsmaterial, das auf der Basis von Fluorkunststoff beruht, zu verbessern.

Die erfindungsgemäße Lösung besteht darin, daß als Füllstoff ein Expandat von Graphit oder blattstrukturierten Silikaten verwendet ist, dessen Teilchen im wesentlichen vollständig von dem Fluorkunststoff umhüllt sind und das zusammen mit dem Fluorkunststoff quer zur Dichtungsebene derart verpreßt ist, daß die Teilchen abgeflacht sind und im Mittel eine parallel zur Dichtungsmaterialebene verlaufende Hauptrichtung aufweisen.

Durch die Wahl des Fluorkunststoffs als wesensbestimmende Grundmasse der Dichtung, in deren Matrix die Füllstoffpartikeln lediglich eingebettet sind, sichert sich die Erfindung die chemischen und handhabungsmechanischen Vorteile der bekannten PTFE-Dichtungen. Durch die Verwendung von expandiertem Graphit als Füllstoff enthält dieser jedoch überraschend vorteilhafte Eigenschaften hinsichtlich

2

EP 0 268 233 B1

seiner Anpassungsfähigkeit und seines elastischen Rückstellvermögens beim Einsatz als Flachdichtung. Die einzelnen Graphitpartikeln wirken als Federkörper innerhalb der Kunststoffmatrix, wodurch diese unter den Einspannkräften nachgeben und sich der Form der Einspannflächen anpassen kann. Für die Rückstellung ist die erfindungsgemäße Flachdichtung aber nicht nur auf die mechanischen Eigenschaften des die Matrix bildenden Kunststoffs angewiesen, sondern sie Wird auch durch die Eigenschaften des Füllstoffs verbessert. Da die Füllstoffpartikeln nicht in sich massiv sind, vermögen sie unter Kompression nachzugeben.

Gleichzeitig wohnt ihnen aufgrund ihrer Schichtenstruktur eine Rückfederungskraft inne, die hauptsächlich in Richtung quer zu den Strukturschichten orientiert ist, also in Spannrichtung der Flachdichtung. In der Richtung ihrer Schichtenerstreckung wirken sie hingegen versteifend auf die Kunststoffmatrix. Die mechanischen Eigenschaften der Dichtung werden daher in Richtung der Flächenerstreckung der Dichtung anders verändert als quer dazu. In der einen Richtung wird die Gestaltfestigkeit des ansonsten zum Fließen neigenden Kunststoffmaterials verbessert, während in der anderen Richtung seine Nachgiebigkeit und Rückstellfähigkeit vergrößert wird. Demgegenüber wirken die Füllstoffe in den oben beschriebenen, bekannten Flachdichtungen auf PTFE-Basis isotrop; d.h. daß eine Verbesserung der Nachgiebigkeit quer zur Flächenerstreckung der Dichtung erkauft wird durch eine Verringerung ihrer Gestaltfestigkeit in Richtung ihrer Flächenerstreckung.

Die Verwendung geblähten und in bestimmter Richtung gepreßten Graphits als Füllstoff in einer Kunststoffmatrix konnte nicht dadurch nahegelegt werden, daß die elastischen Eigenschaften solchen Graphitmaterials von solchen Flachdichtungen bekannt sind, die im wesentlichen nur aus diesem Graphitmaterial bestehen. Man mußte nämlich annehmen, daß die vollständige Einhüllung der Graphitpartikeln durch den Kunststoff diese ihrer elastischen Wirkung berauben würde. In der Tat tritt diese vermutete Wirkung weitgehend ein; es verbleibt aber noch ein Rest an Elastizitätswirkung, der die Gesamteigenschaften des Produkts in wertvoller Weise über diejenigen der vergleichbaren Produkte auf PTFE-Basis hinaushebt.

Ferner konnte nicht vorausgesehen werden, daß die in besonderer Weise in der Kunststoffmatrix orientierten Graphitpartikeln mit der umhüllenden Kunststoffmatrix in so eigenartiger Weise zusammenwirken würden, daß sich eine unterschiedliche Beeinflussung der mechanischen Eigenschaften in Richtung der Flächenerstreckung und quer dazu ergibt.

Wenn im Zusammenhang der Erfindung vereinfachend als pars pro toto von Graphit gesprochen wird, so sind damit auch die ersatzweise verwendbaren, blattstrukturierten Silikate gemeint, insbesondere expandierter Glimmer (beispielsweise geblähter Vermiculit).

Das Merkmal der Orientierung der flächigen, gepreßten Füllstoffpartikeln parallel zur Flächenerstreckung der Dichtung ergibt sich aus der Verpressung quer zur Dichtungsebene.

Das Merkmal, daß die Teilchen im wesentlichen vollständig von dem Fluorkunststoff umhüllt sind, besagt, daß der Fluorkunststoff vorzugsweise weitgehend porenfrei ist und die Partikeln darin im wesentlichen vollständig gekammert sind. Dies schließt nicht aus, daß nach den Gesetzen der Zufälligkeit hier und dort einzelne Füllstoffpartikeln in unmittelbarer Verbindung miteinander stehen. Dies hängt auch weitgehend von der Mischungsqualität sowie von der Größe und Gestalt der Ausgangsprodukte ab. Wenn die Füllstoffpartikeln ebensowie die Kunststoffpartikeln vor der Verpressung sehr klein sind, erzielt man eine vollständigere Einhüllung der Füllstoffpartikeln und im allgemeinen auch ein höherwertiges Produkt; jedoch wird es in manchen Fällen erwünscht sein, den Aufwand durch Verwendung gröberer Partikeln und einer weniger intensiven Mischung zu senken.

Der Fluorkunststoff besteht zweckmäßigerweise aus Polytetrafluorethylen mit einem Anteil an schmelzbaren, hoch temperaturbeständigen Kunststoffen, vorzugsweise schmelzbaren Fluorkunststoffen wie Polyfluorethylenpropylen (FEP) sowie vorzugsweise Polyperfluoralkoxy (PFA). Diese schmelzbaren Fluorkunststoffe können als Gemisch mit Polytetrafluorethylen vorliegen, mit Tetrafluorethylen kopolymerisiert sein oder den Fluorkunststoff allein (ohne PTFE) bilden. Jedoch können die thermoplastichen Kunstoffe auch ersetzt werden durch, beispielsweise Polyamidimide, Polyimide und Polyetheretherketone, die bei der Sintertemperatur von PTFE, die im allgemeinen zwischen 360 und 380° liegt, beständig sind.

Der Füllstoffgehalt liegt zwischen 0.5 und 50 Gew.-%. Eine möglichst vollständige Umhüllung der Füllstoffpartikeln kann besser erreicht werden, wenn der Füllstoffgehalt unter 25 Gew.-%, vorzugsweise unter 15 Gew.-% im allgemeinen noch besser unter 3 Gew.-% liegt. Sehr gute Ergebnisse haben sich bei Anteilen um 1% , gegebenenfalls bis 10%, ergeben.

Das spezifische Gewicht des Dichtungsmaterials liegt zweckmäßigerweise über 1,5 g/cm$^3$, weiter vorzusgweise über 1,8 g/cm$^3$, weiter vorzugsweise über 1,9 g/cm$^3$. Bei besonders widerstandsfähigen Mustern mit trotzdem hinreichender Nachgiebigkeit lag die Dichte zwischen 2,0 und 2,15 g/cm$^3$.

Das hohe spezifische Gewicht ist ein Indiz dafür, daß der Fluorkunststoff als Matrix die Füllstoffpartikeln im wesentlichen porenfrei einschließt.

3

Die mittlere Partikelgröße liegt zweckmäßigerweise zwischen 0,1 und 0,5 mm.

Die erfindungsgemäße Flachdichtung kann nach Verfahren hergestellt werden, die für die Verarbeitung von Polytetrafluorethylen bewährt sind. Vorzugsweise werden der pulverförmige Kunststoff-Rohstoff und der im expandierten, ungepreßten Zustand vorliegende Füllstoff intensiv miteinander gemischt, was zweckmäßigerweise in einem Pulvermischer erfolgt, der auch zu der erwünschten Verkleinerung der Partikelgröße beiträgt. Das Gemisch wird anschließend zu Formpreßlingen oder Folien unter einem Druck von vorzugsweise mindestens 30 bar, weiter vorzugsweise mehr als 100 bar, weiter vorzugsweise mehr als 200 bar, gepreßt und schließlich vorzugsweise druckfrei gesintert.

Beispiel 1:

250 g des von der Firma Hoechst AG unter der Bezeichnung TFM 1700 vertriebenen, pulverförmigen modifizierten PTFE mit einer unregelmäßigen, mittleren Teilchengröße von 0,02 mm und einem Verdichtungsverhältnis von 5,5 : 1 wurden mit 25 g des von der Firma SIGRI Elektrographit GmbH unter der Bezeichnung "Sigraflex fein" in einer Schlagmühle (IKA-Universal-Mühle M 20) während 30 Sek. gemischt und anschließend unter einem Druck von 500 bar zu einem Rohling von etwa 2 mm Dicke gepreßt. Dieser wurde druckfrei gesintert. Das Produkt hatte folgende Eigenschaften:

Dichte   2,06 g/cm$^3$

Reißfestigkeit 14,4 N/mm$^2$

Dehnung 40 %

Belastungsdeformation nach 1 Stunde:    7 %

Belastungsdeformation nach 24 Stunden: 8 %

verbleibende Deformation nach
Entlastung:                            4 %

Die Belastung wurde bei Raumtemperatur unter 14 N/mm$^2$ an seitlich freien Probekörpern von 2mm Dicke und 16 mm Durchmesser vorgenommen.

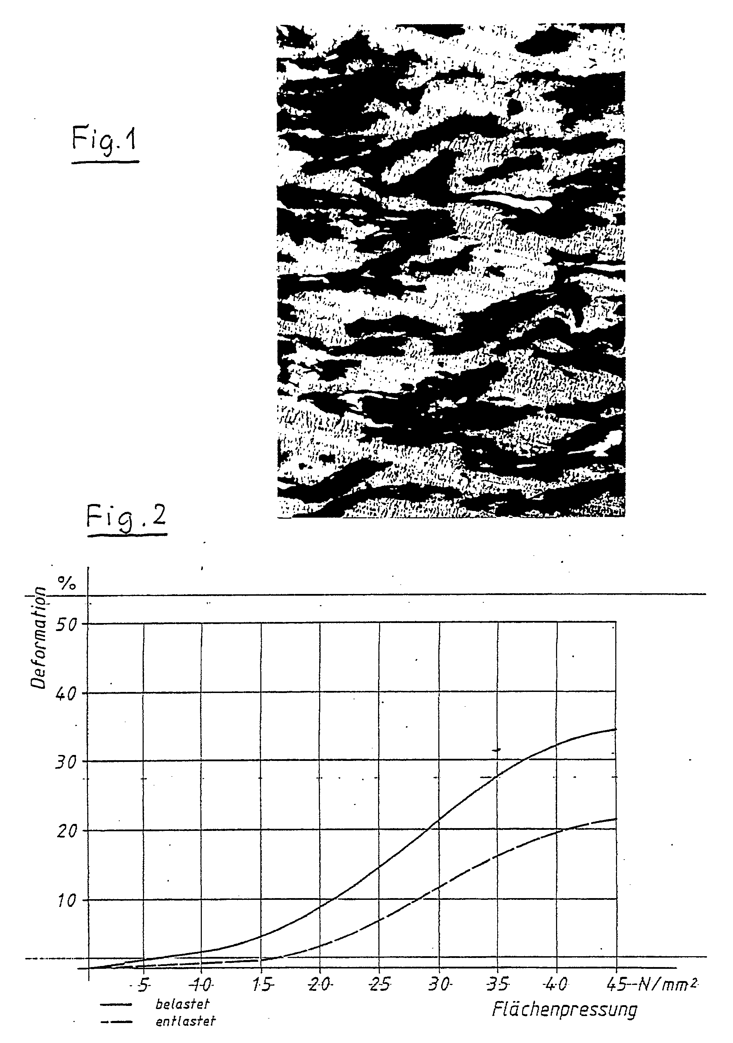

Der Dünnschnitt zeigte in Vergrößerung 1 : 80 das in der Figur 1 wiedergegebene Bild.

Beispiel 2:

Rohstoffe und Verfahren wie in Beispiel 1.
Mengen: 250 g TFM 1700, 10 g Sigraflex fein.

Dichte 2,13 g/cm$^3$

Reißfestigkeit 12,7 N/mm$^2$

Reißdehnung 40 %

Belastungsdeformation nach  1 Stunde:  6,5 %

Belastungsdeformation nach 24 Stunden: 7,5 %

bleibende Deformation nach
Entlastung:                            3,5 %

Beispiel 3:

Ausgangsprodukte wie in Beispiel 1. Mengen: 50 g TFM 1700; 5 g Sigraflex. Sigraflex 60 Sekunden vorgemahlen, im übrigen Verfahren wie in Beispiel 1

```
Dichte 2,11 g/cm²
Reißfestigkeit 11,1 N/mm²
Reißdehnung 55 %
Belastungsdeformation nach  1 Stunde:     6,5 %
Belastungsdeformation nach 24 Stunden:    7,5 %
verbleibende Deformation nach
Entlastung:                               2,5 %
```

Beispiel 4:

TFM 1700 gemäß Beispiel 1 wurde mit 9 Gew-% expandierten Glimmers mit einer Schüttdichte von 330 g/L und einer Körnung von 0 bis 0,1 mm nach dem unter Beispiel 1 beschriebenen Verfahren verarbeitet. Der gesinterte Formkörper hatte folgende Eigenschaften:

```
Dichte 2,16 g/cm³
Reißfestigkeit längs 6,3 N/mm²
Reißfestigkeit quer 13,4 N/mm²
Reißdehnung längs    28 %
Reißdehnung quer     72 %
Härte Shore D        63
Deformation nach  1 Stunde:     4,2 %
Deformation nach  7 Stunden:    4,5 %
Deformation nach 24 Stunden:    4,5 %
verbleibende Deformation
nach Entlastung:                1,1 %
```

Beispiel 5

Gemäß den Angaben von Beispiel 1 wurde TFM 1700 mit 1 Gew.-% "Sigraflex fein" gemischt und zu einem Rohling von 3 mm Dicke verpreßt, der folgende Eigenschaften hatte:

```
Dichte                                    2,15 g/cm³
Reißfestigkeit in Preßrichtung            9,2 N/mm²
Reißfestigkeit quer zur Preßrichtung      16  N/mm²
Reißdehnung in Preßrichung                30%
Reißdehnung quer zur Preßrichtung         247%
Härte Shore D                             59
```

Um die Deformationseigenschaften in Preßrichtung festzustellen, wurden Probekörper von 16 mm Durchmesser und 3 mm Dicke stufenweise von 5 zu 5 N/mm² bis zu 45 N/mm² belastet und wurden bei jeder Stufe sowohl die Deformation unter Belastung als auch die bleibende Deformation nach Entlastung gemessen und daraus das Diagramm Fig. 2 ermittelt. Dies zeigt die Deformation über der Flächenpressung, und zwar in der durchgezogenen Linie unter Belastung und in der gestrichelten Linie eine Stunde nach Entlastung. Man erkennt einerseits den gegenüber reinem PTFE bedeutend reduzierten kalten Fluß wie auch andererseits in der Differenz zwischen den beiden Kurven das hohe Rückstellvermögen des erfindungsgemäßen Produkts.

## Ansprüche

1. Flachdichtung aus einem nachgiebigen Fluorkunststoff mit einem Gehalt von 0.5 bis 50 Gew.-% an porenbildendem, teilchenförmigem Füllstoff, dadurch gekennzeichnet, daß der Füllstoff ein Expandat von Graphit oder blattstrukturierten Silikaten ist, dessen Teilchen im wesentlichen vollständig von dem Fluorkunststoff umhüllt sind und das zusammen mit dem Fluorkunststoff derart quer zur Dichtungsebene verpreßt ist, daß die Teilchen abgeflacht sind und im Mittel eine parallel zur Dichtungsmaterialebene verlaufende Haupt-richtung aufweisen.

2. Flachdichtung nach Anspruch 1, dadurch gekennzeichnet, daß der Fluorkunststoff aus Polytetrafluorethylen mit einem Anteil an schmelzbarem, hoch temperaturbeständigem Kunststoff besteht.

3. Flachdichtung nach Anspruch 2, dadurch gekennzeichnet, daß der hoch temperaturbeständige Kunststoff ein schmelz-barer Fluorkunststoff ist.

4. Flachdichtung nach Anspruch 1, dadurch gekennzeichnet, daß der Füllstoffgehalt unter 25 Gew.-% liegt.

5. Flachdichtung nach Anspruch 4, dadurch gekennzeichnet, daß der Füllstoffgehalt unter 15 Gew.-% liegt.

6. Flachdichtung nach Ansprüch 5, dadurch gekennzeichnet, daß der Füllstoffgehalt unter 3 Gew.-% liegt.

7. Flachdichtung nach einem der Ansprüche 1 bis 6, dadurch gekennzeichnet, daß die Dichte über 1,5 g/cm³ liegt.

8. Flachdichtung nach Anspruch 7, dadurch gekennzeichnet, daß die Dichte über 1,8 g/cm³ liegt.

9. Flachdichtung nach Anspruch 8, dadurch gekennzeichnet, daß die Dichte über 2,0 g/cm³ liegt.

10. Flachdichtung nach einem der Ansprüche 1 bis 9, dadurch gekennzeichnet, daß die mittlere Partikelgröße des Füllstoffs unter 0,5 mm liegt.

11. Verfahren zur Herstellung einer Flachdichtung nach einem der Ansprüche 1-10 dadurch ge kennzeichnet, daß der Kunststoff mit dem Füllstoff gemischt und unter einem Druck von mindestens 30 bar derart quer zur Dichtungsebene verpreßt wird, die Füllstoffteilchen abgeflacht werden und im Mittel eine

EP 0 268 233 B1

parallel zur Dichtungsmaterialebene verlaufende Hauptrichtung erhalten, und das Material anschließend gesintert wird.

**12.** Verfahren nach Anspruch 11, dadurch gekennzeichnet, daß ein Preßdruck von mehr als 100 bar angewendet wird.

**Claims**

**1.** A flat seal of resilient fluorine plastics material with a content of from 0.5 to 50 % by weight of a pore-forming particulate filler, characterised in that the filler is an expandate of graphite or foliated silicates, the particles of which are covered substantially completely by the fluorine plastics material, and which is compressed together with the fluorine plastics material transversely to the sealing plane in such a way that the particles are flattened and, on average, have a principal direction extending parallel to the sealing material plane.

**2.** A flat seal according to Claim 1, characterised in that the fluorine plastics material comprises polytetrafluoroethylene with a proportion of meltable hightemperature resistant plastics material.

**3.** A flat seal according to Claim 2, characterized in that the high-temperature resistant plastics is a meltable fluorine plastics material.

**4.** A flat seal according to Claim 1, characterized in that the filler content is less than 25 % by weight.

**5.** A flat seal according to Claim 4, characterized in that the filler content is less than 15 % by weight.

**6.** A flat seal according to Claim 5, characterized in that the filler content is less than 3 % by weight.

**7.** A flat seal according to any one of Claims 1 to 6, characterised in that its density is above 1.5 g/cm$^3$. 8.

**8.** A flat seal according to Claim 7, characterised in that its density is above 1.8 g/cm$^3$.

**9.** A flat seal according to Claim 8, characterised in that its density is above 2.0 g/cm$^3$.

**10.** A flat seal according to any one of Claims 1 to 9, characterised in that the average particle size of the filler is less than 0.5 mm.

**11.** A method of producing a flat seal according to any one of Claims 1 to 10, characterised in that the plastics material is mixed with the filler and is compressed under a pressure of at least 30 bar transversely to the sealing plane in such a way that the filler particles are flattened and, on average, are given a principal direction extending parallel to the sealing material plane, and the material is subsequently sintered.

**12.** A method according to Claim 11, characterised in that a pressure of more than 100 bar is applied.

**Revendications**

**1.** Materiau d'etanchéité plat en matière plastique fluorée souple ayant une teneur de 0.5 à 50% en poids d'une charge sous forme de particules formant des pores, caractérisé en ce que la charge est un produit expansé de graphite ou de silicates a structure lamellaire dont les particules sont enrobées en presque totalité de la matière plastique fluorée et qui est comprimée avec la matière plastique, transversalement au plan du matériau, de telle sorte que les particules soient aplaties et présentent en moyenne une direction générale parallèle au plan du matériau d'étanchéité.

**2.** Matériau d'étanchéité plat selon la revendication 1, caractérisé en ce que la matière plastique fluorée se compose de polytétrafluoroéthylène avec une certaine quantité d'une matière plastique fusible résistante aux températures élevées.

7

3. Matériau d'étanchéité plat selon la revendication 2, caractérisé en ce que la matière plastique résistante aux températures élevées est une matière plastique fluorée fusible.

4. Matériau d'étanchéité plat selon la revendication 1, caractérisé en ce que la teneur en charge est inférieure à 25%, en poids.

5. Matériau d'étanchéité plat selon la revendication 4, caractérisé en ce que la teneur en charge est inférieure à 15% en poids.

6. Matériau d'étanchéité plat selon la revendication 5, caractérisé en ce que la teneur en charge est inférieure à 3% en poids.

7. Matériau d'étanchéité plat selon l'une quelconque ces revendications 1 à 6, caractérisé en ce que la masse volumique est supérieure à 1,5 g/cm$^3$.

8. Matériau d'étanchéité plat selon la revendicatian 7, caractérisé en ce que la masse volumique est superieure à l,8 g/cm$^3$.

9. Matériau d'étanchéite plat selon la revendication 8, caractérisé en ce que la masse volumique est supérieure à 2,0 g/cm$^3$.

10. Matériau d'étanchéité plat selon l'une quelconque des revendications 1 à 9, caractérisé en ce que la granulométrie moyenne de la charge est inférieure a. 0,5 mm.

11. Procédé de préparation d'un matériau d'étanchéité plat selon l'une quelconque des revendications 1 à 10, caractérisé en ce qu'on mélange la matière plastique avec la charge et on presse sous une pression d'au moins 30 bar transversalement au plan du matériau d'étanchéité plat de telle sorte que les particules de charge soient aplaties et présentent en moyenne une direction générale parallèle au plan du matériau d'étanchéité, et le matériau est ensuite fritté.

12. Procédé selon la revendication 11, caractérisé en ce qu'une pression de pressage de plus de 100 bar est utilisée.

Fig.1

Fig.2